# EUROPÄISCHE PATENTSCHRIFT

(11) **EP 2 504 257 B1**
(45) Veröffentlichungstag und Bekanntmachung des Hinweises auf die Patenterteilung: **02.10.2013**
(21) Anmeldenummer: 11784496.9
(22) Anmeldetag: 17.11.2011
(51) Int. Cl.: B65G 1/137

(54) **KOMMISSIONIER- UND VERSANDVERFAHREN**
PICKING AND SHIPPING METHOD
PROCÉDÉ DE PRÉPARATION DE COMMANDES ET D'EXPÉDITION

(30) Priorität: 29.11.2010 DE 102010060864
(43) Veröffentlichungstag der Anmeldung: 03.10.2012
(73) Patentinhaber: Dematic GmbH, 63073 Offenbach (DE)
(72) Erfinder: STÖTZNER, Matthias, 63500 Seligenstadt (DE)
(74) Vertreter: Moser & Götze
(86) Internationale Anmeldenummer: PCT/EP2011/070386
(87) Internationale Veröffentlichungsnummer: WO 2012/072423

(56) Entgegenhaltungen:
- EP-A1- 0 457 158
- EP-A2- 2 154 088
- DE-A1- 10 019 632

## Beschreibung

Die Erfindung betrifft ein kombiniertes Kommissionier- und Versandverfahren nach dem Ware-zum-Mann-Prinzip, bei dem Versandbehälter und Verpackungseinheiten einer Versandstation zugefördert werden und ein Packer an der Versandstation direkt der Versandstation zugeführten Verpackungseinheiten manuell auf eine entsprechende Versandeinheit packt.

Beim Kommissionieren sind häufig inhomogene Produktspektren zu bearbeiten. Neben Verpackungseinheiten, die direkt auf Versandeinheiten gepackt werden können, besteht bei kleineren Artikeln die Anforderung, diese in einen Versandbehälter zu kommissionieren und diesen Versandbehälter dann als Verpackungseinheit auf die Versandeinheit zu packen (vgl. Gudehus, Timm, Logistik, Springer 1999, Kapitel 12, Seiten 325 ff). Dies gilt z.B. auch für zerbrechliche Artikel, die besonders schonend behandelt und gesichert verpackt werden müssen, und auch für Artikel von hohem Wert, die zur Sicherung gegen Diebstahl gesichert verpackt werden müssen.

Aus der DE 10 2006 025 617 A1 ist ein Arbeitsplatz zum Packen von zu kommissionierten Artikeln auf einen Versandträger bekannt, wobei der Arbeitsplatz eine Packstation, eine Bühne, auf der die Packstation angeordnet ist, eine Versandträgerstation, die unterhalb der Bühne angeordnet ist, eine Hubeinrichtung zum Anheben eines leeren oder teilweise bepackten Versandträgers auf eine Höhe der Packstation, so dass der leere oder teilweise bepackte Versandträger mit zu kommissionierten Artikeln bepackt werden kann, und zum Absenken fertig bepackter Versandträger, und eine zur Packstation hin gerichtete Bahn zum Transport von einzeln zu kommissionierten Artikeln zur Packstation umfasst. Eine Fördertechnik für Ladehilfsmittel, die zu kommissionierende Artikel auf Ladehilfsmittel zur Packstation fördert in einer Weise, dass entweder Artikel von der Bahn oder von der Fördertechnik gepackt werden können.

Die EP 0 457 158 A1 offenbart ein Kommissionier- und Versandverfahren nach dem "Ware zum Mann" Prinzip, gemäß dem Oberbegriff des Anspruchs 1, wobei von einem Kommissionier zuvor befüllter Versandbehälter und Verpackungseinheiten einer Versandstation zugefördert werden.

In automatisierten Kommissioniersystemen nach dem "Ware zum Mann" Prinzip wird der Kommissionier an seinem Arbeitsplatz mit angeforderten kleinen Artikeln je Auftrag versorgt. Diese werden dann von Ihm in den Versandbehälter als Verpackungseinheit gelegt. Anschließend werden die Versandbehälter zu einer Versandstation gefördert, wo die Versandbehälter zusammen mit anderen größeren Packstücken oder Verpackungseinheiten auf eine entsprechende Versandeinheit, z.B. Palette oder Rollwagen, gepackt werden.

Die anderen größeren Packstücke oder Verpackungseinheiten können bei entsprechender Eignung direkt aus dem Lager an den Versandbereich gefördert werden, da ihre Eigenschaften und insbesondere ihre Größe und Unempfindlichkeit ein direktes Packen auf die Versandeinheit (Rollbehälter, Palette etc.) erlauben.

Die Zweistufigkeit des Kommissionier- und Versandprozesses für die kleinen Artikel, die nicht direkt auf die Versandeinheit gepackt werden können, führt zu unwirtschaftlichen Systemen mit zwei Teilsystemen und damit verbundenen Einschränkungen, wie lange Durchlaufzeiten, Gesamtgeschwindigkeit wird durch den langsamsten Schritt bestimmt und der Notwendigkeit die Prozesse zu synchronisieren.

Alternativ müssten beide Packstückgruppen separat versendet werden.

Demgegenüber besteht die Aufgabe der vorliegenden Erfindung ein Verfahren für den Kommissionier- und Versandprozesses bereitzustellen, das die obigen Nachteile zumindest teilweise beseitigt und eine flexible Handhabung von kleinen, teuren oder empfindlichen Artikeln erlaubt.

Diese Aufgabe wird durch das in Anspruch 1 wiedergegebene Verfahren gelöst.

Dadurch, dass der Packer einzelne an die Versandstation geförderte Artikel in einem an der Versandstation bereitgestellten Versandbehälter sammelt, d.h. die kleinen, teuren oder empfindlichen Artikel ohne zusätzliche Kommissioniervorstufe direkt an der Versandstation zu Verpackungseinheiten verpackt, ist es möglich, den Kommissionier- und Versandprozess zu beschleunigen und rationeller zu gestalten, da separate Bereiche nicht mehr unbedingt erforderlich sind.

Die Funktionen des Kommissioniers und der des Packers verschmelzen quasi, insbesondere für die kleinen, teuren oder empfindlichen Artikel Während der Packer seine Tätigkeit des Packens von befüllten Versandbehältern, Verpackungseinheiten und größeren Packstücken auf eine Versandeinheit durchführt, werden ihm auch zusätzlich einzelne Artikel zugefördert, die er in einen bereitgestellten Versandbehälter für den jeweiligen Auftrag zur Versandeinheit packt. Sobald der Versandbehälter voll ist bzw. der Auftrag abgearbeitet ist, wird der Versandbehälter ggf. verschlossen, ggf. als Verpackungseinheiten auf die Versandeinheit gestellt und die Versandeinheit abgesandt.

Der Versandbehälter für die einzelnen Artikel kann dabei einerseits beim Befüllen bereits auf der Versandeinheit bereitgestellt oder nach dem Befüllen auf die Versandeinheit gepackt werden. Dann wird der Versandbehälter am Arbeitsplatz des Packers in ergonomischer Anordnung in Griffweite positioniert.

Der an der Versandstation mit den einzelnen Artikeln zu füllende Versandbehälter kann dem Packer ebenfalls über die Förderstrecke der Artikel zugefördert werden oder gesondert bereitgestellt werden.

Unter Verpackungseinheit wird vorliegend eine kleinste Einheit einer Sendung, die als solche auf einer Versandeinheit versandfähig ist, verstanden.

Unter Artikel werden vorliegend Stücke verstanden, die in völlig unterschiedlicher, uneinheitlicher Form und Größe unverpackt und lose vorliegen und nicht alleine versandfähig sind (vgl. Gudehus, Timm, Logistik, Springer 1999, Kapitel 12, Seiten 325 ff). Dabei versteht sich, dass das Wort Artikel auch für gebündelte Artikel verwendet wird, die ebenfalls nicht alleine versandfähig sind, zum Beispiel aufgrund ihrer empfindlichen Eigenschaften. Besonders die kleinen, teuren oder empfindlichen Artikel eignen sich für das erfindungsgemäße Verfahren, da diese ansonsten immer gesondert behandelt und gehandhabt werden müssten.

Somit eignet sich das erfindungsgemäße Verfahren insbesondere für zentrale Verteilungslager von Einzelhandelsgeschäften, aus denen die Geschäfte mit Waren versorgt werden, die sie zur Auffrischung oder Aufstockung bzw. Ergänzung ihres Sortiments benötigen. Hierbei kommt es nämlich häufig vor, dass neben einfach zu verpackender bzw. zu versendender Ware Kleinteile angefordert werden, eben die oben genannten Artikel, die einzelnen nicht derart versandfähig sind, dass sie auf die entsprechenden Versandeinheiten, wie Paletten oder Rollwagen zum Versand gepackt werden könnten.

Es versteht sich, dass im Rahmen der Erfindung auch von einem Kommissionierer zuvor befüllte Versandbehälter der Versandstation zugeführt werden, wie dies üblich ist.

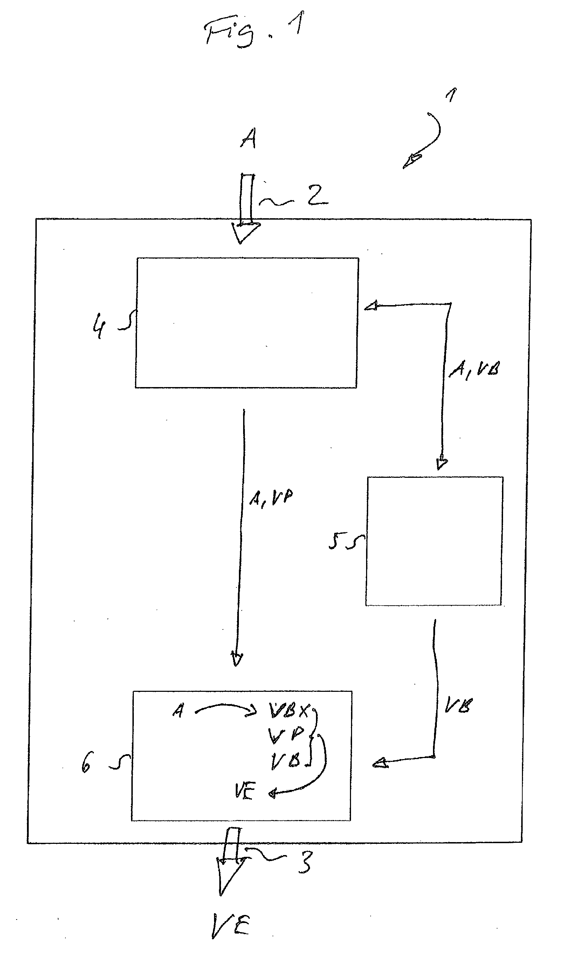

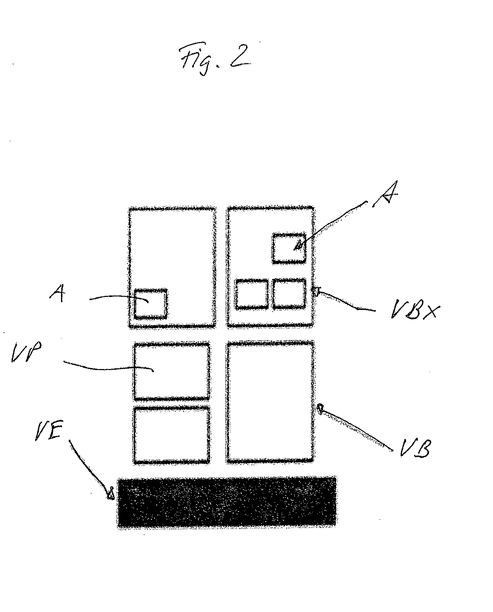

Weitere Einzelheiten der Erfindung ergeben sich aus der nachfolgenden Beschreibung eines Ausführungsbeispiels anhand der Zeichnung, in der Figur 1 ein Flussdiagramm des Ablaufs eines kombinierten Kommissionier- und Versandverfahrens nach dem Ware-zum-Mann-Prinzip in einem als Ganzes mit 1 bezeichnetem Verteilungslager von Einzelhandelsgeschäften und Figur 2 eine beispielhafte Versandeinheit schematisch dargestellt.

Das Verteilungslager 1 von Einzelhandelsgeschäften wird über einen Eingang 2 mit Artikeln A versorgt. Nach Bearbeitung von Aufträgen zur Versorgung von Einzelhandelsgeschäften verlassen Versandeinheiten VE über einen Ausgang 3 das Verteilungslager 1.

Bei der Bearbeitung der Versorgungsaufträge werden die nachgefragte Anzahl von Artikeln A unterschiedlichster Art für den jeweiligen Auftrag zusammengestellt und auf eine (oder mehrere) entsprechende Versandeinheit VE gepackt.

Dazu werden die Artikel A zunächst vom Eingang 2 kommend in einem Lager 4 zwischengelagert. Hierbei können die Artikel A je nach Art der Anlieferung, z.B. auf Paletten oder in Kartons, in Produktbehälter umgepackt werden oder auch in den Kartons gelagert werden. Ebenfalls ist es möglich die Artikel nicht zu depalletieren, sondern auf den Paletten weiter zu lagern. Vielfältigste Lagerarten sind denkbar und im Prinzip bekannt.

Für die Abarbeitung eines Auftrags werden nun, wie bereits bekannt, die unterschiedlichen Artikel nach einander in ausreichenden Mengen z.B. in Produktbehältern lagernd Kommissionierstationen 5 zu geführt, an denen Kommissionierer die Artikel A eines Auftrags in entsprechende Versandbehälter VB legen.

Die noch teilbefüllten Produktbehälter wandern zurück in Lager 4 und die fertig befüllten Versandbehälter VB werden entweder im Lager 4 zwischengelagert oder zu Versandstationen 6 weiterbefördert.

In den Versandstationen 6 packen Packer die vom Kommissionierer zuvor befüllten Versandbehälter VB und direkt der Versandstation 6 aus dem Lager 4 zugeführte Verpackungseinheiten VP manuell auf eine entsprechende Versandeinheit VE.

Die direkt der Versandstation 6 aus dem Lager 4 zugeführten Verpackungseinheiten VP sind also derart beschaffen, dass sie sich ohne zusätzliche Umverpackung etc. auf die Versandeinheit VE packen und sicher transportieren lassen.

Sie benötigen nicht den Umweg über die Kommissionierung. Es versteht sich, dass falls keine Artikel A in einem Auftrag vorhanden sind, die nicht Kommissioniert werden müssen, oder das Artikelspektrum entsprechend ist, der Kommissionierschritt übersprungen werden kann und die Verpackungseinheiten VP direkt der Versandstation 6 zugeführt werden.

Es wird aber oft ein Mischbetrieb notwendig sein, da moderne Einzelhandelsgeschäfte ein durchaus inhomogenes Produktspektrum vertreiben und entsprechend mit einem solchen versorgt werden müssen.

Erfindungsgemäß wird der Packer auch mit Kleinstmengen von einzelnen an die Versandstation 6 geförderte Artikel A versorgt. Diese kann er in einem an der Versandstation 6 bereitgestellten Versandbehälter VBX sammeln.

Fordert also z.B. ein kleines dörfliches Einzelhandelsgeschäft vier Zahnbürsten an, so lohnt deren einzelne Kommissionierung ggf. nicht und die Zahnbürsten werden dem Packer an der Versandstation 6 zugefördert. Dort packt er die Zahnbürsten zusammen mit teuren Artikeln A, wie Rasierklingen oder hochwertigen Pflegecremes, in den dafür extra bereitgestellten Versandbehälter VBX.

Der Versandbehälter VBX für die einzelnen Artikel kann beim Befüllen bereits auf der Versandeinheit VE bereitgestellt sein oder nach dem Befüllen auf die Versandeinheit gepackt werden, d.h. beim Befüllen daneben angeordnet sein.

## Patentansprüche

1. Kombiniertes Kommissionier- und Versandverfahren nach dem Ware-zum-Mann-Prinzip, bei dem von einem Kommissionierer zuvor befüllte Versandbehälter (VB) und Verpackungseinheiten (VP) einer Versandstation (6) zugefördert werden und ein
Packer an der Versandstation direkt der Versandstation zugeführte. Verpackungseinheiten (VP) manuell auf eine entsprechende Versandeinheit (VE) packt, **dadurch gekennzeichnet, dass**
der Packer einzelne an die Versandstation geförderte Artikel (A) in einem an der Versandstation bereitgestellten Versandbehälter (VBX) sammelt.

2. Verfahren nach Anspruch 1, **dadurch gekennzeichnet, dass** der Versandbehälter (VBX)für die einzelnen Artikel (A) beim Befüllen bereits auf der Versandeinheit (VE) bereitgestellt ist.

3. Verfahren nach Anspruch 1, **dadurch gekennzeichnet, dass** der Versandbehälter (VBX) für die einzelnen Artikel (A) nach dem Befüllen auf die Versandeinheit (VE) gepackt wird.

## Claims

1. Combined order-picking and despatch/shipping method on the goods-to-man principle, in which shipping containers (VB) previously filled by an order-picker and packing units (VP) are fed to a despatch station (6) and a packer at the despatch station manually packs packing units (VP) which are fed directly to the despatch station onto an appropriate shipping unit (VE), **characterised in that** the packer collects individual articles (A) fed to the despatch station in a shipping container (VBX) which is made available at the despatch station.

2. Method according to claim 1, **characterised in that**, when being filled, the shipping container (VBX) for the individual articles (A) is already made available on the shipping unit (VE).

3. Method according to claim 1, **characterised in that** the shipping container (VBX) for the individual articles (A) is packed onto the shipping unit (VE) after being filled.

## Revendications

1. Procédé combiné de préparation de commandes et d'expédition selon le principe « Marchandise vers l'Homme », dans lequel des conteneurs d'expédition (VB) préalablement remplis par un opérateur préposé à la préparation de commandes et des unités d'emballage (VP) sont amenés à un poste d'expédition (6) et un opérateur préposé à l'emballage emballe au niveau du poste d'expédition des unités d'emballage (VP) amenées directement au poste d'expédition manuellement sur une unité d'expédition (VE) correspondante,
**caractérisé en ce que**
l'opérateur préposé à l'emballage rassemble des articles individuels (A), amenés au poste d'expédition, dans un conteneur d'expédition (VBX) mis à disposition au poste d'expédition.

2. Procédé selon la revendication 1, **caractérisé en ce que** le conteneur d'expédition (VBX) destinés aux articles individuels (A) est déjà mis à disposition sur l'unité d'expédition (VE) lors du remplissage.

3. Procédé selon la revendication 1, **caractérisé en ce que** le conteneur d'expédition (VBX) destiné aux articles individuels (A) est emballé sur l'unité d'expédition (VE) après le remplissage.
